# FASCICULE DE BREVET EUROPEEN

(11) **EP 3 472 113 B1**
(45) Date de publication et mention de la délivrance du brevet: **01.05.2024**
(21) Numéro de dépôt: 17735210.1
(22) Date de dépôt: 15.06.2017
(51) Int. Cl.: C03C 17/34, C03C 3/087, C03C 10/00, C03C 17/42, F24C 15/02, F24C 15/10

(54) **ARTICLE VERRIER DE TYPE VITROCERAMIQUE ET PROCEDE D'OBTENTION**
GLASKERAMISCHER GLASARTIKEL UND VERFAHREN ZUR HERSTELLUNG DAVON
GLASS-CERAMIC GLASS ARTICLE AND METHOD FOR OBTAINING SAME

(30) Priorité: 17.06.2016 FR 1655634
(43) Date de publication de la demande: 24.04.2019
(73) Titulaire: Eurokera S.N.C., 02400 Chateau-Thierry (FR)
(72) Inventeur: GUEDON, Thibault, 75010 Paris (FR); PASQUINET, Clément, 71230 Saint-Vallier (FR)
(74) Mandataire: Saint-Gobain Recherche
(86) Numéro de dépôt international: PCT/FR2017/051547
(87) Numéro de publication internationale: WO 2017/216487

(56) Documents cités:
- EP-A1- 2 796 432
- DE-A1-102012 109 808
- US-A1- 2013 266 781
- US-A1- 2015 210 871
- Yoldas Yoldas Bulent Bulent E E: "Design of sol-gel coating media for ink-jet printing", Journal of sol-gel science and technology, 1 January 1998 (1998-01-01), pages 147-152, XP093039956, New York DOI: 10.1023/A:1008640413941 Retrieved from the Internet: URL:https://link.springer.com/content/pdf/ 10.1023/A:1008640413941.pdf?pdf=button [retrieved on 2023-04-18]

## Description

La présente invention concerne un article verrier, notamment (en) vitrocéramique, destiné par exemple à couvrir ou recevoir des éléments de chauffage (tel une plaque de cuisson, une porte de four, un insert de cheminée, un pare-feu, etc), et un procédé d'obtention dudit article. Par article verrier, respectivement vitrocéramique, on entend un article à base d'un substrat en matériau verrier, respectivement en vitrocéramique, ledit substrat étant le cas échéant muni d'accessoires ou éléments supplémentaires (décoratifs ou fonctionnels) requis pour son usage final, l'article pouvant désigner tout aussi bien le substrat seul que celui muni d'équipements supplémentaires (par exemple une plaque de cuisson munie de son bandeau de commande, de ses éléments de chauffage, etc). Par "de type vitrocéramique", on entend en plus des vitrocéramiques principalement visées, tout autre matériau verrier présentant un coefficient de dilatation, ou CTE, mesuré selon la norme ISO 7991:1987, inférieur à 50.10⁻⁷ K⁻¹ entre 20 et 300°C, ledit matériau pouvant le cas échéant se substituer à la vitrocéramique dans des applications où le matériau est associé à des éléments chauffants, telles que la réalisation de plaques de cuisson.

Il existe plusieurs produits en vitrocéramique d'usage courant, en particulier les plaques de cuisson en vitrocéramique rencontrant un grand succès auprès des ménagistes, fabricants d'électroménagers et utilisateurs. Ce succès s'explique notamment par l'aspect attractif de ces plaques et par leur facilité de nettoyage.

Une vitrocéramique est à l'origine un verre, dit verre précurseur (ou verre-mère ou green-glass), dont la composition chimique spécifique permet de provoquer par des traitements thermiques adaptés, dits de céramisation, une cristallisation contrôlée. Cette structure spécifique en partie cristallisée confère à la vitrocéramique des propriétés uniques.

Il existe actuellement différents types de plaques en vitrocéramique, chaque variante étant le résultat d'études spécifiques et de nombreux essais, étant donné qu'il est très délicat de faire des modifications sur ces plaques et/ou sur leur procédé d'obtention sans risquer un effet défavorable sur les propriétés recherchées : en particulier, pour pouvoir être utilisée comme plaque de cuisson, une plaque vitrocéramique doit généralement présenter une transmission dans les longueurs d'onde du domaine du visible à la fois suffisamment basse pour masquer au moins une partie des éléments de chauffage sous-jacents au repos et suffisamment élevée pour que, selon les cas (chauffage radiant, chauffage par induction, etc), l'utilisateur puisse détecter visuellement les éléments de chauffage en état de marche dans un but de sécurité et/ou puisse lire le cas échéant les afficheurs ; elle doit également présenter une transmission élevée dans les longueurs d'onde du domaine de l'infrarouge dans le cas notamment des plaques à foyers radiants. Les plaques vitrocéramiques doivent également présenter une résistance mécanique suffisante telle qu'exigée dans leur domaine d'utilisation. En particulier, pour pouvoir être utilisées comme plaques de cuisson dans le domaine de l'électroménager, les plaques vitrocéramiques doivent présenter une bonne résistance (telle que définie par exemple selon la norme EN 60335-2-6) à la pression, aux chocs (support et chute d'ustensiles, etc), etc.

Les plaques de cuisson les plus répandues sont de couleur sombre, en particulier de couleur noire, mais il existe également des plaques d'aspect plus clair (en particulier de couleur blanche, présentant par exemple un flou d'au moins 50% comme décrit dans le brevet FR2766816), voire des plaques transparentes munies de revêtements opacifiants.

EP 2 796 432 A1 divulgue une plaque supérieure en verre pour une cuisinière, dans laquelle le substrat en verre est composé d'une céramique de verre translucide à faible dilatation. Le côte arrière du substrat est revêtu d'une couche de peinture nacrée. La couche de peinture nacrée est formée par un matériau de revêtement pâteux comprenant des pigments nacrés et une résine de silicone, qui est en outre revêtu d'une couche de protection faisant écran à la lumière, formée par un revêtement pâteux comprenant des pigments minéraux noirs et une résine de silicone.

Parmi les revêtements (fonctionnels et/ou décoratifs) connus pour les plaques vitrocéramiques, on trouve traditionnellement les émaux, à base de fritte de verre et de pigments. Les émaux présentent notamment l'avantage de pouvoir être déposés sur le verre précurseur (ou verre-mère ou green-glass) avant céramisation et de pouvoir être cuits lors de la céramisation, et présentent également l'avantage de pouvoir résister à de hautes températures (permettant ainsi l'usage de différents moyens de chauffage pour la plaque) ; cependant ils peuvent diminuer localement la résistance mécanique des plaques vitrocéramiques et peuvent s'écailler, notamment pour des dépôts d'épaisseur importante ou en plusieurs passes, certaines couleurs n'étant en outre pas réalisables ou étant difficiles à obtenir (notamment en une seule passe), la cuisson des émaux pouvant également provoquer l'apparition de teintes non désirées (par exemple brunes ou grises pour les émaux noirs).

Il est également connu d'utiliser certaines peintures résistant à haute température, leur usage restant néanmoins plus limité que celui des émaux, en raison de leur moindre résistance, notamment thermique et à l'abrasion.

Le dépôt des revêtements sur vitrocéramique se fait généralement par sérigraphie, la décoration étant généralement limitée à une ou quelques couleurs, chaque couleur nécessitant généralement une passe de sérigraphie, et les motifs étant généralement limités à des formes simples (cercles, points, aplats...). Cette méthode implique néanmoins un changement d'écran de sérigraphie dès que le décor de la plaque change, et oblige également à stocker tous les écrans nécessaires à l'impression des différents modèles de plaques vitrocéramiques.

Il existe également d'autres techniques de revêtement mises au point pour la décoration de supports de nature différente et permettant des décorations plus variées, par exemple des techniques d'impression numérique telles que le jet d'encre, ces techniques étant généralement plus faciles à mettre en oeuvre. Néanmoins, les encres jusqu'à présent développées pour l'impression jet d'encre sont soit adaptées à la décoration de substrats poreux (papier, plastique) et résistent mal à des températures élevées, leur adhésion sur d'autres types de substrats, tels que des substrats en verre étant en outre insuffisante, soit sont des encres dites céramiques (que l'on peut aussi considérer comme des émaux), formées de frittes de verre destinées à fondre pendant la cuisson pour former une matrice vitreuse, et de pigments, ces encres étant plus appropriées pour le dépôt sur des matériaux verriers soumis à haute température mais présentant parallèlement (comme tous les émaux) l'inconvénient de fragiliser les matériaux verriers sur lesquels elles sont déposées.

Si le dépôt de ces encres céramiques ou émaux par jet a été tenté sur verre et s'est montré satisfaisante pour la décoration de verre architectural où la décoration est peu sollicitée mécaniquement et thermiquement, en revanche les compositions mises au point et ces techniques se sont révélées jusqu'à présent peu adaptées pour la décoration de plaques soumises à haute température telles que des plaques de cuisson vitrocéramiques ou en verre renforcé présentant un CTE inférieur à 50.10⁻⁷ K⁻¹ entre 20 et 300°C, les revêtements obtenus ne répondant pas aux exigences habituelles (en matière de résistance mécanique, de comportement face aux salissures, de résistance à l'abrasion en condition d'usage, etc) des plaques de cuisson.

A l'heure actuelle, il n'existe donc pas de technique permettant de décorer facilement et économiquement les plaques de cuisson en vitrocéramique, ni celles en matériau verrier de CTE inférieur à 50.10⁻⁷ K⁻¹ entre 20 et 300°C, tout en respectant les contraintes, notamment thermiques et mécaniques, propres à cette application, et tout en offrant une grande flexibilité et de nombreuses variations de décors possibles.

Le but de la présente invention a donc été de fournir de nouveaux articles verriers, en particulier vitrocéramiques, notamment de nouvelles plaques (de type vitrocéramiques) destinées à être utilisées avec un ou des éléments de chauffage, en particulier destinées à couvrir ou recevoir des éléments de chauffage telles que des plaques de cuisson, élargissant la gamme des produits existants et présentant une plus grande variété de décors, ces décors étant obtenus de façon facile et économique, tout en conservant pour l'article décoré des propriétés, notamment thermiques et mécaniques, telles que recherchées dans les applications visées.

Ce but a été atteint par l'article mis au point selon l'invention, et grâce au procédé avantageux d'obtention dudit article.

La présente invention concerne ainsi un nouvel article (ou produit) verrier, en particulier vitrocéramique, formé d'au moins un substrat (ou support) en matériau verrier (en particulier en vitrocéramique), tel qu'une plaque (en particulier en vitrocéramique), ledit substrat étant au moins en partie revêtu (en surface, sur au moins une partie d'une face, de préférence la face inférieure dans le cas d'une plaque de cuisson) d'au moins une couche d'encre, avantageusement déposée par jet d'encre, cette encre étant (initialement) formée de (ou étant à base de, ou comprenant des, ou étant formée à partir de) pigments de taille nanométrique et d'au moins un liant silicone (à base de ou formé de (résine(s) ou polymère(s)) silicone, l'encre comprenant préférentiellement comme liant(s) uniquement un ou des liants silicone), ladite couche d'encre étant revêtue d'au moins une couche de peinture à base de (ou comprenant du, ou étant formée de ou à partir de) silicone, cette couche de peinture étant avantageusement déposée sous forme d'aplat ou de couche uniforme, notamment par sérigraphie, et étant de préférence opacifiante.

La présente invention concerne également un procédé de fabrication d'un article (en matériau) verrier (en particulier vitrocéramique) selon l'invention, formé d'au moins un substrat en matériau verrier (en particulier en vitrocéramique), dans lequel on applique, avantageusement par jet d'encre, au moins une couche d'encre, formée de pigments de taille nanométrique et d'au moins un liant silicone, sur au moins une partie dudit substrat, et dans lequel on applique, notamment sous forme d'aplat, au moins une couche de peinture à base de silicone sur ladite couche d'encre, le substrat revêtu étant éventuellement séché (à l'air libre le cas échéant ou par traitement, par exemple thermique) et/ou cuit.

Dans la présente invention, l'article est ainsi muni d'au moins un revêtement, décoratif et/ou fonctionnel, sous forme d'une superposition d'au moins deux couches ou types de couches (revêtement multicouches), dont au moins une couche d'encre (première couche ou premier type de couche) formée de pigments nanométriques et d'un liant silicone, et au moins une (autre) couche (seconde couche ou type de couche, "premier" et "second" désignant un ordre relatif dans le sens où l'une des couches - la première - est comparativement plus près du substrat que la seconde ou est déposée avant la seconde) de peinture silicone, la première couche étant avantageusement déposée par impression jet d'encre et permettant notamment de réaliser le décor ou motif souhaité, et la seconde couche étant déposée de façon à recouvrir la première (en particulier en totalité, et pouvant recouvrir toute la face portant le revêtement multicouches) et protégeant notamment la première couche, et servant également avantageusement d'opacifiant, cette seconde couche étant en particulier déposée par sérigraphie.

L'encre sélectionnée est principalement (à au moins 50% en poids, de préférence au moins 80% dans la couche d'encre finale) formée de pigments nanométriques et de liant(s) silicone (l'encre initiale pouvant également contenir des solvants, ultérieurement éliminés par séchage ou cuisson, et/ou l'encre pouvant en outre contenir un faible taux d'additifs et/ou charges), cette encre, contrairement aux encres céramiques, étant avantageusement dénuée de fritte de verre. Elle est déposée avantageusement par jet d'encre et forme une couche, en particulier de quelques microns d'épaisseur, sur le substrat verrier de type vitrocéramique, cette couche étant généralement non opaque (transparente ou translucide). On peut observer que la couche d'encre ainsi sélectionnée, et dans la configuration de l'invention combinant les deux couches, présente une bonne adhésion sur le matériau verrier de type vitrocéramique, ceci sans même nécessiter de cuisson consécutive à son dépôt, ni nécessiter le dépôt préalable d'un primaire d'adhésion, et ne fragilise pas mécaniquement le substrat verrier de type vitrocéramique (contrairement notamment à un émail), pendant que la peinture sélectionnée sert de protection thermique et avantageusement d'opacifiant (cachant le cas échéant les éléments recouverts par la plaque tels que les systèmes de chauffe, au repos, tout en permettant leur vision le cas échéant en état de marche), l'utilisation de l'une ou l'autre de ces couches seules n'étant en revanche pas satisfaisante pour obtenir un article tel que recherché selon l'invention.

L'ensemble encre et peinture spécifiques choisi permet également de combiner les avantages de deux types de dépôts différents, en particulier, en choisissant le jet d'encre pour le premier type de couche, de pouvoir munir l'article de motifs variés en haute résolution (de type photographie), sur des petites séries le cas échéant et en pouvant au besoin personnaliser les impressions à la pièce sans pour autant nécessiter de matériel coûteux ou de changements complexes de matériels, et, en choisissant une technique plus classique de dépôt pour le second type de couche, de pouvoir déposer une couche de façon rapide sur une surface, le cas échéant, plus importante (en aplat sur toute la face inférieure par exemple), tout en conservant les propriétés, en particulier la résistance thermique et la résistance mécanique, requises pour ce type d'articles, en particulier pour les application visées. L'article présente en particulier une bonne tenue thermique (contrairement à ce que l'on peut obtenir par exemple avec des encres commerciales habituelles utilisées seules, en particulier des encres à polymérisation sous ultraviolets, qui se dégradent lors de la cuisson du revêtement), en particulier lorsque l'encre utilisée est une encre noire (à base de pigments noirs, de type notamment noir de carbone comme indiqué ultérieurement).

La présente invention a ainsi mis au point un produit et une technique de revêtement pour vitrocéramiques ou matériaux verriers de CTE inférieur à 50.10⁻⁷ K⁻¹ entre 20 et 300°C utilisables pour réaliser des plaques de cuisson, permettant d'obtenir une plus grande variété de décors tout en respectant les contraintes, notamment thermiques et mécaniques, propres à l'application préférée visée (plaques décorées soumises à hautes températures telles que des plaques de cuisson) et ceci de façon économique, simple et efficace tout en fragilisant le moins possible le matériau de type vitrocéramique, avec des effets ou rendus de couleurs novateurs ou difficiles à obtenir jusqu'à présent, ces décors pouvant être fonctionnels (identification de zones, par exemple de commande ou d'affichage, etc) et/ou esthétiques, le revêtement mis au point présentant une bonne tenue (en particulier mécanique, thermique et/ou à l'abrasion) et une bonne pérennité sur l'article revêtu obtenu.

De préférence, le substrat formant l'article selon l'invention (ou l'article lui-même s'il n'est formé que du substrat) est une plaque, destinée par exemple à couvrir ou recevoir au moins un élément de chauffage, en particulier destinée à servir de plaque de cuisson ou de paroi (en particulier porte ou partie de porte) de four ou d'insert de cheminée ou encore de pare-feu.

Le substrat est généralement de forme géométrique, en particulier rectangulaire, voire carrée, voire circulaire ou ovale, etc, et présente généralement une face "supérieure" ou "externe" (face visible ou tournée vers l'utilisateur) en position d'utilisation, une autre face "inférieure" ou "interne" (généralement cachée, par exemple dans un châssis ou caisson de meuble) en position d'utilisation, et une tranche (ou chant ou épaisseur). La face supérieure est généralement plane et lisse mais peut aussi présenter au moins une zone en relief et/ou au moins une zone en creux et/ou au moins une ouverture et/ou des bords biseautés (ces formes ayant été ajoutées lors de la fabrication du substrat, par exemple par laminage ou effondrement ou pressage, etc, ou ayant été ajoutées en reprise), etc, ces variations de forme constituant avantageusement des variations continues de la plaque (sans changement de matériaux ou raccords). La face inférieure est généralement plane et lisse selon la présente invention mais pourrait le cas échéant présenter également des structurations (par exemple des picots).

L'épaisseur du substrat verrier, en particulier vitrocéramique, utilisé est généralement d'au moins 2 mm, notamment d'au moins 2.5 mm, en particulier est de l'ordre de 3 à 30 mm, et avantageusement est inférieure à 15 mm, en particulier est de l'ordre de 3 à 15 mm, notamment de 3 à 6 mm.

Le substrat (respectivement l'article) est de préférence en vitrocéramique, résistante à haute température, et présentant avantageusement un CTE nul ou quasi-nul, en particulier inférieur (en valeur absolue) à 30.10⁻⁷ K⁻¹ entre 20 et 300°C, notamment inférieur à 15.10⁻⁷K⁻¹, voire inférieur à 5.10-7 K⁻¹ entre 20 et 300°C.

De façon plus générale, la présente invention s'applique à un substrat (respectivement un article) en tout matériau verrier présentant un CTE (coefficient de dilatation) inférieur (en valeur absolue) à 50.10⁻⁷ K⁻¹ entre 20 et 300°C, qu'il s'agisse de vitrocéramique (dont le CTE est avantageusement inférieur à 30.10⁻⁷ K⁻¹), ou de tout autre matériau verrier présentant un CTE inférieur à 50.10⁻⁷ K⁻¹ entre 20 et 300°C, par exemple un verre renforcé (notamment trempé chimiquement ou thermiquement). Le coefficient de dilatation (ou d'expansion) thermique, ou CTE, est mesuré, entre la température ambiante (en particulier d'environ 25°C) et 300°C (on parle également de CTE_{300°C}), suivant la norme ISO 7991:1987, en utilisant en particulier un dilatomètre haute température de référence DIL 402C commercialisé par la société Netzsch, à une vitesse de chauffe de 3°C/min.

De préférence, le substrat de l'article selon l'invention est formé d'un matériau verrier, en particulier d'une vitrocéramique, transparent(e), présentant notamment une transmission lumineuse T_{L} (mesurée selon la norme ISO 9050:2003 en utilisant l'illuminant D65, par exemple à l'aide d'un spectrophotomètre muni d'une sphère intégrante, la mesure à une épaisseur donnée étant ensuite convertie le cas échéant à l'épaisseur de référence de 4 mm, cette transmission totale, intégrée dans le domaine du visible, tenant compte de la transmission directe et de l'éventuelle transmission diffuse) supérieure à 10%, de préférence supérieure à 70%, notamment supérieure à 80%. Dans le cas d'une vitrocéramique, ce substrat transparent comprend généralement des cristaux de structure β-quartz au sein d'une phase vitreuse résiduelle.

La vitrocéramique utilisée peut être notamment de composition telle que décrite dans les demandes de brevets publiées sous les numéros suivants : WO2013171288, US2010167903, WO2008065166, EP2086895, JP2010510951, EP2086896, WO2008065167, US2010099546, JP2010510952, EP0437228, WO2016038319, cette vitrocéramique étant en particulier une vitrocéramique d'aluminosilicate de lithium, cette vitrocéramique étant par exemple celle des plaques commercialisées sous le nom KeraLite par les sociétés Eurokera et Keraglass.

La vitrocéramique utilisée peut le cas échéant comprendre des colorants donnant des colorations particulières au substrat, par exemple de l'oxyde de vanadium, de l'oxyde de fer, de l'oxyde de cobalt, de l'oxyde de cérium, de l'oxyde de sélénium, de l'oxyde de chrome, voire de l'oxyde de nickel, de l'oxyde de cuivre et/ou de l'oxyde de manganèse, etc.

La vitrocéramique peut être affinée à l'arsenic (c'est-à-dire de (verre mère de) composition comprenant de l'ordre de 0.2% à 1.5% en poids d'oxyde d'arsenic (exprimé en As₂O₃), ou peut être non affinée à l'arsenic (en particulier présentant un taux d'oxydes d'arsenic inférieur à 0.2%, en particulier inférieur à 0.1%, voire nul) ou affinée à l'étain ou affinée au(x) sulfure(s), et peut être obtenue par laminage ou par flottage.

Le cas échéant le matériau verrier utilisé peut aussi être un verre non céramisé présentant un CTE inférieur à 50.10⁻⁷ K⁻¹, en particulier trempé, par exemple un aluminosilicate de lithium trempé tel que décrit dans les demandes de brevets publiées sous les numéros suivants : FR1060677, WO2012080672, ou dans la demande déposée en France sous le numéro 1363157, ou encore un verre trempé d'un autre type (sodo-calcique, borosilicate, etc), par exemple tel que décrit dans la demande publiée sous le numéro WO2012146860.

Le premier type de couche du revêtement (final), déposé ou se trouvant sur le substrat peut couvrir une ou plusieurs zones de la surface du substrat, cette couche (ainsi que la seconde couche déposée sur cette première couche, et le revêtement final formé des deux types de couches) étant préférentiellement sur la (ou en) face inférieure ou interne du substrat, en particulier quand celui-ci est une plaque destinée notamment à être utilisée comme plaque de cuisson. Le premier type de couche couvre généralement une partie seulement de la face du substrat sur laquelle ce type de couche est déposé (de préférence la face inférieure ou interne précitée) afin notamment de former le ou les motifs recherchés, tandis que le second type de couche couvre généralement la quasi-totalité (par exemple au moins 90% de la surface) ou la totalité, non seulement de ce premier type de couche mais aussi de cette même face, afin par exemple de masquer les éléments se trouvant derrière cette face, notamment quand l'article n'est pas en fonctionnement/est au repos.

Le premier type de couche/ l'encre déposée est formé(e), conformément à l'invention, de pigments nanométriques et d'au moins un liant silicone. Le terme encre implique la présence de pigments et de liant(s) ou solvant(s), et connote également un mode de dépôt tel que le jet d'encre dans la présent invention.

Par pigments nanométriques ou à taille nanométrique, on entend des particules de (ou formant ces) pigments présentant une dimension ou taille inférieure à 100 nanomètres, de préférence inférieure à 50 nm, quelle que soit la forme de ces particules.

On appelle taille d'une particule son diamètre équivalent, c'est-à-dire le diamètre de la sphère qui se comporterait de manière identique lors de l'analyse granulométrique des particules (ou de la poudre formée desdites particules) formant (initialement) les pigments considérés, la distribution granulométrique (ensemble des tailles de particules) étant mesurée en particulier par granulométrie laser. Avantageusement, au moins 50%, et de préférence au moins 90%, des pigments présents dans l'encre utilisée dans la présente invention présentent une taille inférieure à 100 nm (on évalue alors la répartition ou distribution de taille en utilisant le percentile D50, signifiant que 50% des particules de l'ensemble de particules considéré (ou de la poudre considérée) présentent une taille inférieure à D50, ou en utilisant respectivement le percentile D90, signifiant que 90% des particules de l'ensemble de particules considéré présentent une taille inférieure à D90), et de préférence inférieure à 50 nm, et de façon particulièrement préférée tous les pigments de l'encre présentent une taille nanométrique.

Le premier type de couche/ l'encre déposée est avantageusement formé(e) d'au moins 5%, de préférence au moins 10% en poids de pigments nanométriques (dans la couche d'encre finale), le taux de pigments n'excédant pas préférentiellement 50% en poids dans la composition de l'encre (dans la couche d'encre finale, une fois sèche).

Les pigments utilisés pour réaliser la couche d'encre peuvent être minéraux ou organiques, et résistent de préférence à la chaleur. Par exemple on peut utiliser des pigments de noir de carbone, phtalocyanine, lithol rubine, diarylide, ou encore des pigments à base d'oxydes métalliques, tels que des oxydes de chrome, des oxydes de cuivre, des oxydes de fer, des oxydes de cobalt, des oxydes de nickel, des oxydes de zinc, des oxydes de manganèse, des oxydes de cérium, des oxydes de titane, etc, ou des pigments à base de chromates de cuivre ou de cobalt, etc. De préférence on utilise des pigments noirs de type noir de carbone.

Les pigments sont notamment dissous ou dispersés dans le liant silicone précité. Par liant silicone on entend un liant (ou une composition servant de liant, c'est-à-dire servant à enrober la poudre pigmentaire et permettant l'agglomération en masse des particules après séchage ou durcissement pour former la couche d'encre solide) principalement (c'est-à-dire à raison d'au moins 50%, voire 100% en poids de l'extrait sec) formé de (résine(s) (polymère(s), monomère(s), oligomère(s))) silicone(s) (ou polysiloxanes) le cas échéant dans un solvant (faisant partie du liant silicone et/ou faisant partie de l'encre). Comme solvant (du liant et/ou dans l'encre) on peut utiliser par exemple un solvant à base d'alcool tel que l'éthanol, le méthanol ou le glycérol, de méthyl-éthyl-cétone, d'acétate d'éthyle, de diméthylformamide, de méthoxy- ou éthoxypropanol, voire d'eau, etc, l'éthanol en particulier permettant un séchage rapide (et étant utilisé le cas échéant avec un co-solvant tel que le glycérol ou le diméthylformamide ou le méthoxypropanol), le taux de solvant dans l'encre lors du dépôt étant généralement de l'ordre de 50 à 80% en poids de la composition, le solvant étant ensuite éliminé pour obtenir la couche finale (cette élimination se faisant majoritairement lors du séchage pour l'encre selon l'invention). L'encre peut comprendre le cas échéant d'autre(s) liant(s) ou résine(s) que le(s) liant(s) (ou résine(s)) silicone (par exemple à base de (résine(s)) polyester ou époxy), mais de préférence comprend majoritairement, voire comme seul(s) liant(s) ou résine(s) un ou des liants ou résine(s) silicone, à des taux par exemple de 50 à 95% en poids de l'encre (dans la couche d'encre finale).

Le cas échéant, l'encre peut également inclure d'autres types de composants, notamment un ou plusieurs additifs (tels que plastifiant(s), agents(s) mouillant(s), agent(s) stabilisant(s), dispersant(s), tensioactif(s), ajusteur(s) de pH ou de viscosité, agents ralentissant l'évaporation, conducteurs, biocide(s), antimousse(s), anti-oxydant(s), etc), ou une ou des charges minérales (autres que des pigments et ne fondant pas notamment lors de la cuisson contrairement à des frittes, ces charges ayant par exemple un rôle de renfort ou limitant l'apparition de fissures dans la couche, par exemple étant formées de carbonates de calcium et/ou magnésium, de sulfate de baryum, de silice ou silicates, etc.), à des taux n'excédant pas préférentiellement 20% en poids (dans la couche d'encre finale), les composants sous forme solide étant également préférentiellement sous forme de nanoparticules.

Les encres utilisées sont en particulier et avantageusement des encres de référence NanoColours Ink jet commercialisées par la société MuchColours.

Préférentiellement, la viscosité au dépôt des encres utilisées est comprise entre 1 et 100 mPa.s, notamment de 1 à 50 mPa.s. Avantageusement également, la tension superficielle/tension de surface de l'encre est comprise entre 20 et 50 mN/m.

Les encres sélectionnées selon l'invention résistent thermiquement aux températures auxquelles les zones concernées des articles selon l'invention sont soumises et sont également stables à la lumière.

Comme indiqué précédemment, le dépôt de l'encre afin de former le premier type de couche se fait avantageusement par jet d'encre. La technique jet d'encre permet (avantageusement sous contrôle d'ordinateur) un dépôt direct, sans contact, et avec seulement la quantité d'encre nécessaire, sur le substrat selon l'invention. Dans cette technique, l'encre liquide pulsée à travers un ou des orifices capillaires, se sépare en gouttelettes, chaque microgoutte étant le cas échéant projetée et/ou déviée, électriquement ou magnétiquement, au cours de sa projection vers le support d'impression. L'image imprimée est ainsi formée d'un grand nombre de petites taches d'encres juxtaposées. L'impression peut se faire en continu ou en jet à la demande et permet un dépôt et un séchage efficaces et rapides, l'épaisseur de la couche finale d'encre, formée par les gouttes, étant de préférence comprise entre 0.1 µm et 10 µm dans la présente invention, notamment entre 1 et 5 µm.

Par extension, par couche d'encre, on entend que la couche peut être formée d'une ou plusieurs encres (chacune répondant avantageusement à la définition de l'encre selon l'invention, c'est-à-dire étant à base de pigments nanométriques et de liant silicone) le cas échéant mélangées et/ou superposées, en simultané (dépôts simultanés lors d'une même passe d'imprimante jet d'encre) et/ou consécutivement (plusieurs passes d'imprimante). En particulier, plusieurs encres de couleurs primaires peuvent être superposées pour former la couche avantageusement imprimée (ou appliquée) par jet d'encre (ou obtenue par impression jet d'encre).

L'ajustement des couleurs par superposition ou mélange d'encres pour obtenir la couche d'encre, en particulier par jet d'encre, est particulièrement simple et précis. La couleur est par exemple définie par un ratio entre différentes couleurs, dont généralement des couleurs élémentaires ou primaires (telles que le cyan, le magenta et le jaune), notamment par un ratio entre le cyan, le magenta, le jaune et le noir, et est obtenue avantageusement par superposition des dépôts (des encres) de chacune des couleurs dans les ratios (ou rapports ou proportions) retenus. Il n'est ainsi pas nécessaire de préparer une solution avec les bons ratios au préalable ; les ratios sont par exemple simplement entrés dans le logiciel de gestion de l'imprimante au moment de l'impression. Ils peuvent donc être ajustés très aisément en fonction des lots de substrats utilisés et des décorations recherchées. L'application par jet d'encre permet également de s'affranchir des problèmes d'inhomogénéité d'épaisseur observés par exemple avec la sérigraphie, et d'obtenir une bonne uniformité de la couleur résultante.

La couche d'encre déposée selon l'invention est généralement non opaque (transparente ou translucide) et présente en particulier une transmission lumineuse d'au moins 12% et pouvant aller notamment jusqu'à 85%. Cette transmission lumineuse est mesurée selon la norme ISO 9050:2003 en utilisant l'illuminant D65, pour la couche déposée sur une plaque vitrocéramique transparente de 4 mm d'épaisseur et de transmission lumineuse TL supérieure à 80% présentant la composition suivante (en poids) : SiO₂ : 67.4%, Al₂O₃: 20%, As₂O₃ : moins de 1%, BaO moins de 1%, TiO₂ : 2.6%, ZnO : 1.6%, ZrO₂ : 1.7%, MgO: 1.25%, Na₂O : moins de 0.5%, K₂O : moins de 0.5% , LiO₂ : 3.45% et Fe₂O₃ : moins de 0.1%, la transmission lumineuse étant mesurée à l'aide d'un spectrophotomètre commercialisé par la société Perkin Elmer sous la référence Lambda 900.

L'adhésion de la couche d'encre déposée est bonne, sans même nécessiter de cuisson et sans nécessiter de traitement préalable du support et/ou l'utilisation d'un promoteur d'adhésion, d'une couche d'accrochage ou d'un primaire.

Afin de se solidifier, l'encre déposée selon l'invention peut être séchée à température ambiante (notamment en laissant le substrat revêtu de l'encre sécher à l'air libre), les grandes vitesses d'impression et la nature du support imposant cependant souvent un séchage forcé, notamment par traitement thermique (par exemple entre 100 et 200°C). Avantageusement, l'encre déposée selon l'invention ne nécessite pas de cuisson à haute température avant revêtement par le deuxième type de couche.

Conformément à l'invention, la couche d'encre, après dépôt et séchage éventuel est revêtue d'au moins une couche de peinture à base de silicone, cette couche de peinture étant avantageusement déposée par sérigraphie.

Le terme peinture permet notamment d'opérer une distinction par rapport au terme encre utilisé pour la première couche, notamment en terme de composition (la peinture, en particulier, incluant généralement des charges inorganiques, contrairement à l'encre où de telles charges sont moins présentes ou absentes, et l'encre utilisée selon l'invention incluant des pigments nanométriques...), de viscosité (la peinture présentant une viscosité plus élevée que celle de l'encre) et de mode de dépôt (la peinture étant déposée notamment sous forme d'aplat, en particulier par sérigraphie, pulvérisation (spray)), rouleau ou rideau, contrairement à l'encre déposée par jet d'encre selon l'invention, les épaisseurs déposées étant en outre différentes).

De préférence, comme indiqué précédemment, si la première couche est préférentiellement non opaque (transparente ou translucide), la seconde couche est en revanche préférentiellement opacifiante, en particulier diminue la transmission lumineuse de la précédente couche. La couche de peinture déposée selon l'invention présente en particulier une transmission lumineuse inférieure à 15%. Cette transmission lumineuse est mesurée selon la norme ISO 9050:2003 en utilisant l'illuminant D65, pour la couche déposée sur une plaque vitrocéramique transparente de 4 mm d'épaisseur et de transmission lumineuse TL supérieure à 80% présentant la composition suivante (en poids) : SiO₂ : 67.4%, Al₂O₃: 20%, As₂O₃ : moins de 1%, BaO : moins de 1%, TiO₂ : 2.6%, ZnO : 1.6%, ZrO₂ : 1.7%, MgO: 1.25%, Na₂O : moins de 0.5%, K₂O : moins de 0.5% , LiO2 : 3.45% et Fe₂O₃ : moins de 0.1%, la transmission lumineuse étant mesurée à l'aide d'un spectrophotomètre commercialisé par la société Perkin Elmer sous la référence Lambda 900.

La couche de peinture (ou chaque couche de peinture si plusieurs couches sont déposées, le dépôt d'une seule couche étant cependant préféré), combinée à la couche d'encre selon l'invention, est avantageusement choisie de façon à résister à de hautes températures et à présenter une stabilité au niveau de sa couleur et de sa cohésion avec la plaque, et de façon à ne pas affecter les propriétés mécaniques de la plaque. Elle présente avantageusement une température de dégradation supérieure à 350°C, en particulier comprise entre 350°C et 700°C, et est à base, dans des proportions d'au moins 15% en poids par rapport à l'extrait sec de la peinture, de résine(s) silicone, modifiée(s) le cas échéant par l'incorporation d'au moins un radical tel qu'un radical alkyle, phényle, etc et/ou par l'incorporation d'une autre résine telle qu'une résine alkyde. La ou les résines silicone de la peinture sont en particulier des résines polysiloxanes ou silsesquioxanes, présentant par exemple des groupements phényls et le cas échéant réticulables, et présentant généralement une masse moléculaire moyenne en poids (Mw) comprise entre 2000 et 300 000 Daltons, et choisies par exemple parmi les polydiméthylsiloxanes, les polydiphénylsiloxanes, les polymères de phénylméthylsiloxane, les copolymères de diméthylsiloxane-diphénylsiloxane, etc, comme les résines Dow Corning^{®} 804, 805, 806, 808, 840, 249, 409 HS et 418 HS, Rhodorsil^{®} 6405 et 6406 de Rhodia, Triplus^{®} de General Electric Silicone et SILRES^{®} 604 de Wacker Chemie GmbH, utilisées seules ou en mélange, etc.

La peinture peut également comprendre des pigments ou colorants, de préférence des pigments inorganiques, en particulier à base d'oxydes métalliques tels que des oxydes de chrome, des oxydes de cuivre, des oxydes de fer, des oxydes de cobalt, des oxydes de nickel, des oxydes de manganèse, des oxydes de cérium, des oxydes de titane, etc, ou à base de chromates de cuivre, de chromates de cobalt, etc, à des taux n'excédant pas 60% en poids par rapport à l'extrait sec (ou dans la couche finale). On peut également utiliser comme pigments des particules d'un ou de métaux tels que l'aluminium, le cuivre, le fer, etc, ou des alliages à base d'au moins un de ces métaux, ou des plaquettes de mica revêtues (par exemple de TiO₂ ou SiO₂). De préférence, la peinture comprend des pigments blancs (par exemple de TiO₂), ou éventuellement des pigments noirs (par exemple formés d'un mélange d'oxydes de fer, chrome, cobalt et nickel (spinelles Co-Cr-Fe-Ni, comme commercialisés notamment par la société Ferro sous la référence 240137), ou ceux formé d'un mélange d'oxydes de chrome et de cuivre (spinelles Cr-Cu), ou à base de MnO₂, Fe₂O₃ et/ou CoO, ou encore des pigments à base de graphite ou noir de carbone, etc).

La peinture sous sa forme prête au dépôt comprend également généralement un médium permettant la mise à viscosité désirée pour l'application sur le substrat, et permettant le cas échéant la liaison avec le substrat. Ce médium se consumant généralement au plus tard lors de la cuisson de la peinture, peut notamment comprendre des solvants, des diluants, des huiles, des fractions de pétrole, des matières filmogènes, etc. La proportion de médium dans la composition prête à être déposée est de préférence comprise entre 20% et 60 % en poids de ladite composition.

La peinture comprend également dans la plupart des cas une ou des charges minérales (autres que des pigments et ne fondant pas notamment lors de la cuisson contrairement à des frittes, et ayant par exemple un rôle de renfort ou participant également à la tenue thermique de l'ensemble, par exemple des charges formées de carbonates de calcium, kaolin, etc.), à des taux généralement d'au moins 5% en poids et n'excédant pas préférentiellement 40% en poids (par rapport à l'extrait sec ou dans la couche finale) pour assurer sa cohésion ou son renforcement mécanique.

La composition avant dépôt se présente généralement sous forme d'un mélange liquide-solide stable, de consistance pâteuse et de viscosité adaptée au procédé de dépôt (en particulier par sérigraphie), la viscosité au dépôt de la peinture étant préférentiellement comprise entre 100 et 10000 mPa.s.

L'épaisseur de la couche finale (après cuisson) de peinture (ou de chaque couche de peinture le cas échéant) peut être notamment comprise entre 1 et 50 microns, par exemple entre 10 et 30 µm, l'application de la peinture pouvant s'effectuer par toute technique appropriée et rapide permettant notamment de faire des aplats, telle que dépôt à la brosse, à la raclette, par pulvérisation, dépôt électrostatique, trempage, dépôt au rideau, dépôt par sérigraphie, spray, etc, l'application se faisant de préférence par sérigraphie, en particulier et avantageusement sur une grande surface de la face où se trouve la première couche (la couche de peinture couvrant généralement et de préférence au moins 90%, voire la totalité, de la face inférieure, certaines zones, par exemple des zones d'affichage, pouvant le cas échéant rester non revêtues par la couche de peinture, voire porter un autre revêtement localisé, sous forme par exemple d'une couche organométallique semi transparente), cette application étant suivie le cas échéant par un séchage, le substrat revêtu de la couche d'encre et de la peinture étant ensuite généralement traité thermiquement à une température par exemple comprise entre 80 et 500°C après le dépôt de la peinture afin d'opérer la cuisson/réticulation de la peinture et l'élimination le cas échéant des restes de solvants éventuels.

L'article revêtu présente une bonne tenue thermique compatible avec l'utilisation de divers types de chauffages, ne pose pas de problèmes d'entretien, de rayures ou d'abrasion, il présente une bonne résistance aux chocs thermiques, et au vieillissement ainsi qu'une résistance mécanique suffisante. Du point de vue du procédé, les compositions déposées sont compatibles avec les lignes de production existantes.

Comme déjà évoqué, la présente invention concerne également le procédé de fabrication des articles selon l'invention, comme précédemment défini, les revêtements étant déposés successivement sur le substrat ou support vitrocéramique (en particulier vitrocéramique, obtenu préalablement par céramisation, ou en autre matériau verrier présentant un CTE inférieur à 50.10⁻⁷ K⁻¹ entre 20 et 300°C,) en opérant avantageusement un simple séchage (à l'air libre ou accéléré par traitement thermique notamment) entre les deux dépôts, le substrat revêtu des deux types de revêtements étant ensuite généralement cuit.

Pour mémoire, la fabrication des plaques vitrocéramiques s'opère généralement comme suit : dans un four de fusion, on fond le verre de composition choisie pour former la vitrocéramique, puis on lamine le verre fondu en un ruban ou feuille standard en faisant passer le verre fondu entre des rouleaux de laminage et on découpe le ruban de verre aux dimensions souhaitées. Les plaques ainsi découpées sont ensuite céramisées de manière connue en soi, la céramisation consistant à cuire les plaques suivant le profil thermique choisi pour transformer le verre en le matériau polycristallin appelé « vitrocéramique » dont le coefficient de dilatation est nul ou quasi-nul et qui résiste à un choc thermique pouvant aller jusqu'à 700°C. La céramisation comprend généralement une étape d'élévation progressive de la température jusqu'au domaine de nucléation, généralement situé au voisinage du domaine de transformation du verre, une étape de traversée en plusieurs minutes de l'intervalle de nucléation, une nouvelle élévation progressive de la température jusqu'à la température du palier de céramisation, le maintien de la température du palier de céramisation pendant plusieurs minutes puis un refroidissement rapide jusqu'à la température ambiante.

Dans le cas d'un matériau verrier autre que le vitrocéramique, la plaque peut être fabriquée par exemple par flottage ou laminage, et par exemple par trempe thermique ou chimique pour obtenir le matériau verrier présentant un CTE inférieur à 50.10-7 K-1 entre 20 et 300°C

Le cas échéant, le procédé comprend également une opération de découpe (généralement avant céramisation pour la vitrocéramique), par exemple par jet d'eau, traçage mécanique à la molette, etc. suivie par une opération de façonnage (meulage, biseautage,...).

La cuisson du substrat muni des deux types de revêtements étant effectuée séparément de l'opération de céramisation du substrat (on parle alors de procédé avec recuisson ou cuisson en reprise), cette cuisson peut notamment être opérée à une température appropriée pour la cuisson de la peinture, cette gamme de températures se situant notamment entre 80 et 500°C pour la présente invention.

Comme indiqué précédemment, après dépôt de chaque type de couche, l'article revêtu est généralement séché (par exemple par infra-rouge ou en étuve), notamment entre 100 et 200°C, qu'il s'agisse du séchage de la couche d'encre ou du séchage de la couche de peinture, de façon à évaporer au moins en partie le solvant ou médium présent le cas échéant, fixer le revêtement et permettre la manipulation de l'article, résultant en un revêtement au moins partiellement séché.

L'épaisseur de l'ensemble des couches déposées/ du revêtement final obtenu (après cuisson) est généralement entre 2 et 50 µm, en particulier entre 5 et 40 µm, voire entre 10 et 30 µm. De préférence, le substrat revêtu présente une transmission lumineuse TL (mesurée selon la norme ISO 9050 :2003 en utilisant l'illuminant D65, la mesure à une épaisseur donnée étant ensuite convertie le cas échéant à l'épaisseur de référence de 4 mm selon la norme ISO 9050 :2003, cette transmission totale, intégrée dans le domaine du visible, tenant compte de la transmission directe et de l'éventuelle transmission diffuse) inférieure à 15% sur toute la surface revêtue (certaines zones, telles que les afficheurs, pouvant ne pas être revêtues du revêtement selon l'invention, afin par exemple de garder une certaine transparence, ou pouvant n'être munies que de l'une des couches décrites telle que la couche de peinture, voire être munies d'un autre revêtement).

Le cas échéant, le substrat peut comprendre un ou des revêtements supplémentaires, en particulier localisés (par exemple un émail en face supérieure pour former des motifs simples ou des logos). L'article selon l'invention peut également comprendre, outre le substrat muni des revêtements précédents, des éléments supplémentaires, par exemple le substrat peut être muni de (ou associé avec des) élément(s) fonctionnel(s) ou de décor supplémentaire(s) (cadre, connecteur(s), câble(s), élément(s) de commande, afficheur(s), par exemple à diodes électroluminescentes dits « à 7 segments » ou à cristaux liquides, bandeau de commande électronique à touches sensitives et affichage digital, etc.), notamment lorsque le substrat est une plaque destinée à servir de plaque de cuisson. Le substrat ou l'article peut également être monté sur un appareil à l'intérieur duquel sont disposés un ou des éléments de chauffage, sans qu'il soit nécessaire d'intercaler un élément intermédiaire visant à masquer l'intérieur de l'appareil à la vue de l'utilisateur. L'invention concerne ainsi tous les appareils (ou dispositifs) de cuisson et/ou de maintien à haute température comportant au moins un substrat revêtu selon l'invention (sous forme par exemple d'une plaque ou porte), par exemple cuisinières, tables de cuisson encastrables, fours, etc. L'invention englobe aussi bien des appareils de cuisson comportant une seule plaque que des appareils comportant plusieurs plaques, chacune de ces plaques étant le cas échéant à feu unique ou à feux multiples. Par le terme « feu », on entend un emplacement de cuisson. L'invention concerne également des appareils de cuisson mixtes dont la ou les plaques de cuisson comportent plusieurs types de feux. En outre, l'invention n'est pas limitée à la fabrication de plaques de cuisson pour cuisinières ou tables de cuisson. Les articles selon l'invention peuvent également être, comme précisé précédemment, d'autres articles (inserts de cheminées, pare-feu, etc) devant notamment présenter une grande insensibilité aux variations de température.

Les exemples qui suivent illustrent les résultats obtenus avec des articles vitrocéramiques selon la présente invention, en comparaison avec des exemples de référence.

### Exemple comparatif 1

On utilise une plaque de verre mère transparente lisse/lisse de 4 mm d'épaisseur et présentant une transmission lumineuse TL de plus de 80%, à partir d'un verre ayant une composition selon la demande FR2657079. Ce verre est fondu aux alentours de 1600-1750°C, en une quantité telle qu'un ruban de verre puisse être laminé, ruban dans lequel des plaques de verre, de dimensions finales 50 cm × 60 cm × 0,4 cm, sont découpées.

On imprime le décor sélectionné, de type photographie, à une épaisseur de l'ordre de quelques µm (donnant une épaisseur de 3 µm après séchage), par impression jet d'encre en face inférieure de la vitrocéramique en utilisant une imprimante Fujifilm Dimatix Materials printer DMP-2800 de la société Fujifilm et en utilisant une encre céramique à base d'une fritte de verre contenant du bismuth commercialisée par la société Dip Tech sous la référence white ceramic ink.

La couche d'encre est ensuite cuite lors du procédé de céramisation (selon un cycle tel que décrit dans la demande de brevet FR2657079) de la plaque.

On observe une fragilisation de la plaque, la contrainte à rupture en flexion (ou facteur d'échelle) mesurée lorsque la face revêtue est placée en extension étant inférieure à 70 MPa (la contrainte à rupture en flexion mesurée pour le substrat non revêtu étant supérieure à 150 MPa). La contrainte à rupture en flexion (ou facteur d'échelle) est mesurée à l'aide d'un test de flexion par anneau sur tripode, sur un échantillon de dimensions de l'ordre de 7 cm × 7 cm × 0.4 cm. L'échantillon repose sur 3 billes de 9.5 mm de diamètre positionnées au sommet d'un triangle équilatéral inscrit dans un cercle de 40 mm de diamètre. Une force est appliquée au centre de l'échantillon avec un anneau de 10 mm de diamètre, avec une vitesse de l'ordre de 5 mm/min. Les résultats sont interprétés à l'aide du modèle de Weibull décrit dans l'article "A statistical distribution of strength of materials, Royal Swedish Institute For Engineering Research, W. Weibull, Stockholm 1939, 1-45", la donnée obtenue, révélatrice de la contrainte moyenne à rupture en flexion, étant appelée facteur d'échelle.

On utilise pour chacun des exemples suivants une plaque vitrocéramique transparente lisse/lisse, commercialisée sous la référence Keralite par la société Eurokéra, de 4 mm d'épaisseur et présentant une transmission lumineuse TL de plus de 80% (et obtenue généralement par céramisation à partir d'un verre ayant une composition selon la demande FR2657079 ou selon la demande WO2013171288) et l'on imprime le même genre de décor de type photographie que dans l'exemple comparatif 1.

### Exemple comparatif 2:

On imprime le décor sélectionné, à une épaisseur de l'ordre de 2 µm (épaisseur après séchage), par impression jet d'encre en face inférieure de la vitrocéramique en utilisant une imprimante Anapurna de la société Agfa- Gevaert (l'utilisation d'une autre imprimante que celle utilisée dans le précédent exemple pouvant jouer éventuellement sur la définition de l'image mais n'influant pas sur les propriétés de la couche obtenue) et en utilisant une encre acrylique à séchage sous ultra-violet commercialisée par la société Agfa sous la référence Anapurna M.

On réalise ensuite par sérigraphie (à l'aide de toiles habituelles en polyester ou polyamide) un aplat de peinture sur toute la face inférieure de la plaque (et sur la première couche d'encre déposée), à une épaisseur de l'ordre de 20 µm (donnant une épaisseur de l'ordre de 10 µm après séchage), à l'aide d'une peinture blanche formée de 29% en poids de liant epoxy commercialisé par la société Biesterfeld Helevtia sous la référence Epilink DP 660, de 8.5% en poids de pigments commercialisés par la société Kronos sous la référence Kronos 2310, de 18% de sulfate de barium, de 12% de talc, de 4% de charges commercialisées par la société Deuteron sous la référence Deuteron MK, de 1% d'agent mouillant commercialisé par la société Air products sous la référence surfynol 420, de 2% d'agent débullant commercialisé par la société Evonik sous la référence Foamex 815N, le reste étant formé par de l'eau déminéralisée, cette base ayant en outre été mélangée à un liant amine commercialisé par la société Air Products sous la référence Epires ER8 dans une proportion de 10 parts de base pour 3 parts de liant amine pour former la peinture.

La plaque revêtue est ensuite cuite vers 450°C pendant 1 h.

On observe après cuisson une délamination de la couche d'encre, ainsi qu'un brunissement des couleurs.

Les mêmes observations sont également faites lorsque l'on enduit préalablement (au dépôt de la couche d'encre) par chififonnage la vitrocéramique d'une couche d'un primaire à base d'amino-silanes commercialisé sous la référence Hydropep 100 par la société Sika France.

### Exemple comparatif 3 :

On imprime le décor sélectionné, à une épaisseur de l'ordre de 2 µm (épaisseur après séchage), par impression jet d'encre en face inférieure de la vitrocéramique en utilisant une imprimante Practika de la société MuchColours et en utilisant une encre à pigments nanométriques et liant silicone dénuée de fritte de verre commercialisée par la société MuchColours sous la référence Nanocolours ink jet.

La plaque revêtue de la seule couche d'encre est ensuite séchée à l'air libre pendant 24h.

On observe, après vieillissement en four à 200°C pendant 500 h, un effrittement de la couche d'encre. De plus, le substrat revêtu présente une transmission lumineuse TL supérieure à 50% dans certaines zones, le revêtement n'étant pas suffisant pour masquer les éléments de chauffage éventuels placés sous la plaque.

### Exemple selon l'invention :

On imprime le décor sélectionné, à une épaisseur de l'ordre de 2 µm (épaisseur après séchage), par impression jet d'encre en face inférieure de la vitrocéramique en utilisant une imprimante Practika de la société MuchColours et en utilisant l'encre à pigments nanométriques et liant silicone dénuée de fritte de verre commercialisée par la société MuchColours sous la référence Nanocolours ink jet Black, le liant silicone étant formé de poly(méthylphénylsiloxane) et les pigments étant des pigments de noir de carbone, l'encre comprenant en outre de l'éthanol (solvant).

La plaque revêtue de la seule couche d'encre est ensuite séchée à l'air libre pendant 24h.

On réalise ensuite par sérigraphie (à l'aide de toiles habituelles en polyester ou polyamide) un aplat de peinture sur toute la face inférieure de la plaque (et sur la première couche d'encre déposée), à une épaisseur de l'ordre de 20 µm (donnant une épaisseur de 10 µm après cuisson), à l'aide d'une peinture blanche à base de silicone formée d'une poudre de résine de polyméthylsilsesquioxane (37.5g) commercialisée par la société Wacker sous la référence Belsil PMS - MK, et dissoute, à raison de 50% en poids, dans du terpinéol (solvant) pour obtenir une base de silicone, des pigments blancs commercialisés par la société Kemira sous la référence Kemira 300 (10g), une huile de silicone commercialisée par la société Sigma Aldrich sous la référence Silicone Oil (1.5g) et du butanol (co-solvant, 4.5g) étant également ajoutés dans cette base de silicone.

La plaque revêtue est ensuite cuite vers 450°C pendant 1 h. L'épaisseur du revêtement final après cuisson est de l'ordre de 12 µm.

Après cuisson, il apparaît que les motifs ont conservé leur couleur d'origine, que le substrat n'a pas été fragilisé mécaniquement (la contrainte à rupture en flexion mesurée étant de l'ordre de celle du substrat non revêtu, c'est-à-dire supérieure à 150 MPa, lorsque la face revêtue est placée en extension), qu'il ne s'est produit aucune délamination, le substrat revêtu présentant en outre une transmission lumineuse TL inférieure à 15% sur toute sa surface permettant notamment de masquer les éléments de chauffage éventuels placés sous la plaque.

On effectue également un test de vieillissement en four à 200°C pendant 500h. A l'issue de ce test, aucune décoloration visible ni délamination n'est également notée.

Des tests thermiques sont en outre effectués en plaçant une résistance chauffante en face supérieure pour simuler une casserole vide, la résistance étant portée une première fois à 360°C pendant 90 min puis une seconde fois à 560°C pendant 10 min. Encore une fois, à l'issue de ce test, aucune décoloration visible n'est notée, de même qu'aucune déformation ni conséquence optique.

Les mêmes observations sont également faites lorsque l'on remplace la peinture par une peinture noire à base de silicone formée d'une poudre de résine de polyméthylsilsesquioxane (37.5g) commercialisée par la société Wacker sous la référence Belsil PMS - MK, et dissoute, à raison de 50% en poids, dans du terpinéol (solvant) pour obtenir une base de silicone, des pigments noirs (à base de plaquettes de mica revêtues) commercialisés par la société Ciba sous la référence Xymara Satin Black Pearl (15g), une huile de silicone commercialisée par la société Sigma Aldrich sous la référence Silicone Oil (1.5g) et du butanol (co-solvant, 4.5g) étant également ajoutés dans cette base de silicone.

A noter que l'utilisation de l'une ou l'autre couche (d'encre ou de peinture) précédente seule ne permet pas l'obtention de telles propriétés, l'utilisation de l'encre seule posant notamment des problèmes de délaminage et d'opacité insuffisante et l'utilisation de la peinture seule ne permettant pas notamment l'obtention des décors recherchés.

Les articles selon l'invention peuvent notamment être utilisés avec avantages pour réaliser une nouvelle gamme de plaques de cuisson pour cuisinières ou tables de cuisson, mais peuvent également être utilisés avec avantages pour réaliser des éléments de paroi ou des parois (par exemple des portes) de fours, ou pour réaliser des inserts de cheminée ou des pare-feu, etc.

## Revendications

1. Article verrier, en particulier vitrocéramique, destiné en particulier à être utilisé avec au moins un élément de chauffage, ledit article étant formé d'au moins un substrat, tel qu'une plaque, en matériau verrier, en particulier en vitrocéramique, ledit substrat étant au moins en partie revêtu d'au moins une couche d'encre, avantageusement déposée par jet d'encre, cette encre étant formée de pigments de taille nanométrique et d'au moins un liant polysiloxane, ladite couche d'encre étant revêtue d'au moins une couche de peinture à base de silicone, cette couche de peinture étant avantageusement déposée sous forme d'aplat, notamment par sérigraphie.

2. Article selon la revendication 1, **caractérisé en ce que** l'encre est dénuée de fritte de verre.

3. Article selon l'une des revendications 1 à 2, **caractérisé en ce que** le substrat revêtu présente une transmission lumineuse TL inférieure à 15% sur sa surface revêtue.

4. Article selon l'une des revendications 1 à 3, **caractérisé en ce que** le revêtement formé des deux couches se trouve en face inférieure ou interne du substrat.

5. Article selon l'une des revendications 1 à 4, **caractérisé en ce que** le substrat est formé d'un matériau verrier présentant un CTE inférieur à 50.10⁻⁷ K⁻¹ entre 20 et 300°C, ledit matériau étant préférentiellement une vitrocéramique, de CTE avantageusement inférieur à 30.10⁻⁷ K⁻¹, ou étant par exemple un autre matériau verrier présentant un CTE inférieur à 50.10⁻⁷ K⁻¹ entre 20 et 300°C, tel qu'un verre renforcé, notamment trempé chimiquement ou thermiquement.

6. Article selon l'une des revendications 1 à 5, **caractérisé en ce que** le substrat est formé d'une vitrocéramique transparente, présentant notamment une transmission lumineuse T_{L} supérieure à 10%, de préférence supérieure à 70%, notamment supérieure à 80%

7. Article selon l'une des revendications 1 à 6, **caractérisé en ce que** la couche d'encre est non opaque, en particulier présente une transmission lumineuse TL d'au moins 12%, et la couche de peinture est opacifiante, en particulier présente une transmission lumineuse TL inférieure à 15%.

8. Article selon l'une des revendications 1 à 7, **caractérisé en ce que** le(s) liant(s) polysiloxane représentent de 50% à 95% en poids de l'encre.

9. Article selon l'une des revendications 1 à 8, **caractérisé en ce que** la peinture présente une température de dégradation supérieure à 350°C, et est à base, dans des proportions d'au moins 15% en poids de résine(s) silicone.

10. Article selon l'une des revendications 1 à 9, **caractérisé en ce que** l'encre comprend comme pigments des pigments noirs, tels que des pigments de noir de carbone.

11. Article, tel qu'un dispositif de cuisson et/ou de maintien à haute température, selon l'une des revendications 1 à 10, comportant en outre un ou plusieurs éléments de chauffage.

12. Procédé de fabrication d'un article verrier, en particulier vitrocéramique, formé d'au moins un substrat verrier, en particulier vitrocéramique, notamment selon l'une des revendications 1 à 7, dans lequel on applique, avantageusement par jet d'encre, au moins une couche d'encre formée de pigments de taille nanométrique et d'au moins un liant polysiloxane sur au moins une partie dudit substrat, et dans lequel on applique, notamment sous forme d'aplat, en particulier par sérigraphie, au moins une couche de peinture à base de silicone sur ladite couche d'encre.

13. Procédé selon la revendication 12, **caractérisé en ce que** la couche de peinture couvre au moins 90% de la face inférieure.

## Patentansprüche

1. Glas-, insbesondere Glaskeramikartikel, der dafür bestimmt ist, mit mindestens einem Heizelement verwendet zu werden, wobei der Artikel aus mindestens einem Substrat, wie einer Platte, aus Glasmaterial, insbesondere aus Glaskeramik, ausgebildet ist, wobei das Substrat mindestens teilweise mit mindestens einer Tintenschicht beschichtet ist, die vorteilhafterweise durch einen Tintenstrahl aufgebracht wird, wobei diese Tinte aus Pigmenten in Nanogröße und mindestens einem Polysiloxanbindemittel ausgebildet ist, wobei die Tintenschicht mit mindestens einer Farbschicht auf Silikonbasis beschichtet ist, wobei diese Farbschicht vorteilhafterweise in einem gleichmäßigen Farbton, insbesondere durch Siebdruck, aufgebracht wird.

2. Artikel nach Anspruch 1, **dadurch gekennzeichnet, dass** die Tinte frei von Glasfritte ist.

3. Artikel nach einem der Ansprüche 1 bis 2, **dadurch gekennzeichnet, dass** das beschichtete Substrat auf seiner beschichteten Oberfläche eine Lichtdurchlässigkeit TL von weniger als 15 % aufweist.

4. Artikel nach einem der Ansprüche 1 bis 3,
**dadurch gekennzeichnet, dass** die Beschichtung, die aus den zwei Schichten ausgebildet ist, sich auf der Unter- oder der Innenseite des Substrats befindet.

5. Artikel nach einem der Ansprüche 1 bis 4, **dadurch gekennzeichnet, dass** das Substrat aus einem Glasmaterial, das einen CTE von weniger als 50,10⁻⁷ K⁻¹ zwischen 20 und 300 °C aufweist, ausgebildet ist, wobei das Material vorzugsweise eine Glaskeramik mit einem CET von vorteilhafterweise weniger als 30,10⁻⁷ K⁻¹ oder beispielsweise ein anderes Glasmaterial ist, das einen CET von weniger als 50,10⁻⁷ K⁻¹ zwischen 20 und 300 °C aufweist, wie ein verstärktes Glas, das insbesondere chemisch oder therm isch gehärtet ist.

6. Artikel nach einem der Ansprüche 1 bis 5, **dadurch gekennzeichnet, dass** das Substrat aus einer transparenten Glaskeramik ausgebildet ist, die insbesondere eine Lichtdurchlässigkeit T_{L} von mehr als 10 %, vorzugsweise mehr als 70 %, insbesondere mehr als 80 %, aufweist.

7. Artikel nach einem der Ansprüche 1 bis 6, **dadurch gekennzeichnet, dass** die Tintenschicht nicht opak ist, insbesondere eine Lichtdurchlässigkeit TL von mindestens 12 % aufweist, und die Farbschicht trübend ist, insbesondere eine Lichtdurchlässigkeit TL von weniger als 15 % aufweist.

8. Artikel nach einem der Ansprüche 1 bis 7, **dadurch gekennzeichnet, dass** das/die Polysiloxanbindemittel von zu 50 Gew.-% bis 95 Gew.-% die Tinte ausmacht/ausmachen.

9. Artikel nach einem der Ansprüche 1 bis 8, **dadurch gekennzeichnet, dass** die Farbe eine Abbautemperatur von mehr als 350 °C aufweist und in Anteilen von mindestens 15 Gew.-% auf Silikonharz(en) basiert.

10. Artikel nach einem der Ansprüche 1 bis 9, **dadurch gekennzeichnet, dass** die Tinte als Pigmente schwarze Pigmente, wie Rußpigmente, vorweist.

11. Artikel, wie eine Vorrichtung zum Kochen und/oder Halten bei hoher Temperatur, nach einem der Ansprüche 1 bis 10, ferner umfassend ein oder mehrere Heizelemente.

12. Verfahren zum Herstellen eines Glas-, insbesondere eines Glaskeramikartikels, der aus mindestens einem Glas-, insbesondere einem Glaskeramiksubstrat, ausgebildet ist, besonders nach einem der Ansprüche 1 bis 7, wobei mindestens eine Tintenschicht, die aus Pigmenten in Nanogröße und mindestens einem Polysiloxanbindemittel ausgebildet ist, vorteilhafterweise durch einen Tintenstrahl, auf mindestens einen Teil des Substrats aufgebracht wird, und wobei, besonders in einem gleichmäßigen Farbton, insbesondere durch Siebdruck, mindestens eine Farbschicht auf Silikonbasis auf die genannte Tintenschicht aufgebracht wird.

13. Verfahren nach Anspruch 12, **dadurch gekennzeichnet, dass** die Farbschicht mindestens 90 % der Unterseite bedeckt.

## Claims

1. A glass, in particular glass-ceramic, article intended in particular to be used with at least one heating element, said article being formed of at least one substrate, such as a plate, made of glass material, in particular made of glass-ceramic, said substrate being at least partly coated with at least one layer of ink, advantageously deposited by inkjet printing, this ink being formed of nanoscale pigments and of at least one polysiloxane binder, said layer of ink being coated with at least one layer of silicone-based paint, this layer of paint advantageously being deposited in the form of a flat tint, in particular by screen printing.

2. The article as claimed in claim 1, **characterized in that** the ink is free of glass frit.

3. The article as claimed in either of claims 1 and 2, **characterized in that** the coated substrate has a light transmission T_{L} of less than 15% on its coated surface.

4. The article as claimed in one of claims 1 to 3, **characterized in that** the coating formed of the two layers is on the lower or inner face of the substrate.

5. The article as claimed in one of claims 1 to 4, **characterized in that** the substrate is formed of a glass material having a CTE of less than 50×10⁻⁷ K⁻¹ between 20°C and 300°C, said material preferentially being a glass-ceramic, having a CTE advantageously of less than 30×10⁻⁷ K⁻¹, or being for example another glass material having a CTE of less than 50×10⁻⁷ K⁻¹ between 20°C and 300°C, such as a reinforced glass, in particular chemically or thermally tempered glass.

6. The article as claimed in one of claims 1 to 5, **characterized in that** the substrate is formed of a transparent glass-ceramic, in particular having a light transmission T_{L} of greater than 10%, preferably greater than 70%, in particular greater than 80%.

7. The article as claimed in one of claims 1 to 6, **characterized in that** the layer of ink is non-opaque, in particular has a light transmission T_{L} of at least 12%, and the layer of paint is opacifying, in particular has a light transmission T_{L} of less than 15%.

8. The article as claimed in one of claims 1 to 7, **characterized in that** the polysiloxane binder(s) represent from 50% to 95% by weight of the ink.

9. The article as claimed in one of claims 1 to 8, **characterized in that** the paint has a decomposition temperature above 350°C, and is based, in proportions of at least 15% by weight, on silicone resin(s).

10. The article as claimed in one of claims 1 to 9, **characterized in that** the ink comprises, as pigments, black pigments, such as carbon black pigments.

11. The article, such as a device for cooking and/or maintaining at high temperature, as claimed in one of claims 1 to 10, further comprising one or more heating elements.

12. A process for manufacturing a glass, in particular glass-ceramic, article formed of at least one glass, in particular glass-ceramic, substrate in particular as claimed in one of claims 1 to 7, wherein at least one layer of ink formed of nanoscale pigments and of at least one polysiloxane binder is applied, advantageously by inkjet printing, on at least one portion of said substrate, and wherein at least one layer of silicone-based paint is applied on said layer of ink, in particular in the form of a flat tint, in particular by screen printing.

13. The process as claimed in claim 12, **characterized in that** the layer of paint covers at least 90% of the lower face.
